# EUROPEAN PATENT SPECIFICATION

(11) **EP 2 933 815 B1**
(45) Date of publication and mention of the grant of the patent: **16.01.2019**
(21) Application number: 15164019.0
(22) Date of filing: 17.04.2015
(51) Int. Cl.: H01H 31/02, H01H 9/02, E04H 9/02, F16F 15/04, F16F 7/10

(54) **SEISMIC ISOLATION DEVICE FOR A SWITCH OF THE TYPE USED IN HIGH-VOLTAGE ELECTRIC SYSTEMS**
SEISMISCHE TRENNUNGSGERÄT FÜR EINEN SCHALTER IN HOCHSPANNUNGSSYSTEMEN
DISPOSITIF D'ISOLATION SISMIQUE POUR UN COMMUTATEUR DU TYPE UTILISÉ DANS LES SYSTÈMES ÉLECTRIQUES À HAUTE TENSION

(30) Priority: 17.04.2014 IT MI20140729
(43) Date of publication of application: 21.10.2015
(73) Proprietor: Terna Rete Italia S.p.A., 00156 Roma (IT)
(72) Inventor: Di Bartolomeo, Evaristo, 00156 Roma (IT); Rebolini, Massimo, 00123 Roma (IT); Amoretti, Marilena, 00156 Roma (IT); Freddo, Andrea, 00128 Roma (IT); Sembiante, Falco, 00133 Roma (IT)
(74) Representative: Baroni, Matteo

(56) References cited:
- EP-A1- 2 889 877
- DE-A1- 2 801 078
- JP-A- 2006 210 074
- US-A- 2 999 143

## Description

### Field of the invention

The present invention relates to a seismic isolation device associated with a switch of the type used in high-voltage electric systems.

### Background art

A seismic event, particularly a very intense one, can cause severe damages to the elements that make up electric lines.

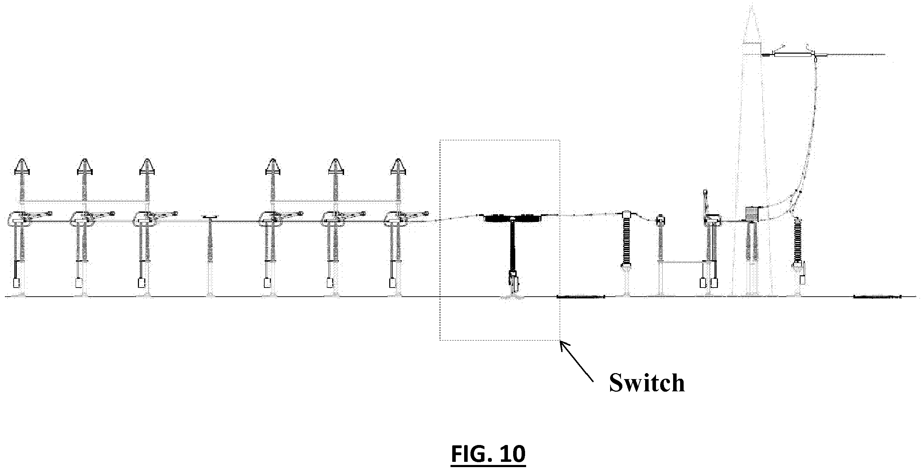

In the field of electric energy transportation, high-voltage (e.g. 380-420 kV) lines comprise devices called high-voltage switches. They are characterized by a vertically extending T-shaped structure, with a footprint much smaller than their height (see Figure 10), and a weight distribution with a high centre of gravity.

Providing seismic isolation for very slender structures, like the switch used in high-voltage systems, is difficult because the most common isolation systems (of the elastomer and "friction pendulum" type) cannot be subjected to traction stresses. Traction stresses are very difficult to avoid in systems having high ratios between their height and the dimensions of their base, especially when most of the mass is concentrated at the top. A further problem is due to the rigidity of the switch structure, e.g. when the latter is made of ceramic material.

Seismic qualification requirements for structural elements of electric lines, such as high-voltage switches, are now more stringent than they were in the past, i.e. they must be compliant with the AF5 level in accordance with the EN 62271.207 CEI standard, compatible with the specific level of seismic hazard (calculated according to the NTC 2008 standard) of most installation sites.

The solutions known in the art, in case of incongruity between the seismic qualification of the object and the seismic hazard of the site, require complete or partial replacement of the structural element.

Especially in situations wherein the element still has a considerable residual life, it is then necessary to evaluate the possibility of making an intervention that will be economically sustainable and technically reliable, for the purpose of avoiding the integral replacement of the element and the resulting high costs.

European patent EP-0077042-B1 describes, as set out in the granted claim 1, a damper for absorption of tilting oscillations between a foundation (16) and a plate (14) forming the foot part of an appliance, in particular a high-voltage switching device (2) to be set up in regions endangered by earthquakes, with the use of threaded bolts (18), which are anchored in the foundation and penetrate the plate, and of spring elements (38), which are provided for oscillation damping and for limitation of the bending moment in case of oscillations, wherein the spring elements are arranged between the upper side of the plate and upper counterbearings (28, 30), which are mounted with threaded bolts and surround the threaded bolts concentrically, characterized in that the plate (14) rests on fixed lower counterbearings (22, 24) mounted with threaded bolts (18), and that annular springs (38) are provided which display a hysteresis adequate for damping and which are biased in such a manner that a force-locking connection between the plate (14) and the foundation is established below a settable force.

In addition to being complex to implement, however, the solution provided in EP-0077042-B1 also suffers from problems in terms of limited usability, which are due to the fact that it mostly operates in the presence of vertical stresses. As a matter of fact, it is not effective in the presence of high-intensity seismic events with a complex composition of simultaneous motions of different types, both sussultatory and undulatory ones. JP-2006210074-A describes an antivibration device, which can be considered to be an antiseismic one, for high-voltage insulators, which has a double-level structure countering horizontal stresses, with the two perpendicular planes sliding relative to each other, and comprising constraints using rails and return springs.

Also the solution provided in JP-2006210074-A suffers from limited usability, in that it can only counter horizontal stresses along the two directions defined by the rails, while also being complex to implement. It is not effective in the presence of high-intensity seismic events with a complex composition of simultaneous motions of different types, both sussultatory and undulatory ones.

EP-2889877-A1, having a priority date earlier than- and published after- the priority date of the present case, shows a seismic isolated base of a switch for a high-voltage electric system, comprising one seismic isolation device, said device comprising: a first metallic plate, square in shape, adapted to be fixed to a basement; a second metallic plate, adapted to be fixed to said switch base; four dampers/isolators of the wire-rope type, connected between said first and second plates, mutually arranged at the vertices of a square, and oriented at a 45° angle relative to the sides of said first plate.

### Summary of the invention

It is an object of the present invention to propose seismic isolated base of a switch for a high-voltage electric system, which is aimed at overcoming the above-mentioned problems and improving the component's degree of seismic qualification.

It is an object of the present invention to provide a seismic isolated base of a switch for a high-voltage electric system, comprising at least one seismic isolation device, as described in the attached claim 1.

It is a particular object of the present invention to provide seismic isolated base of a switch for a high-voltage electric system, comprising at least one seismic isolation device, as will be better described in the claims, which are an integral part of the present description.

### Brief description of the drawings

Further objects and advantages of the present invention will become apparent from the following detailed description of one example of embodiment (and two variants) thereof referring to the annexed drawings, which are only supplied by way of non-limiting example, wherein:

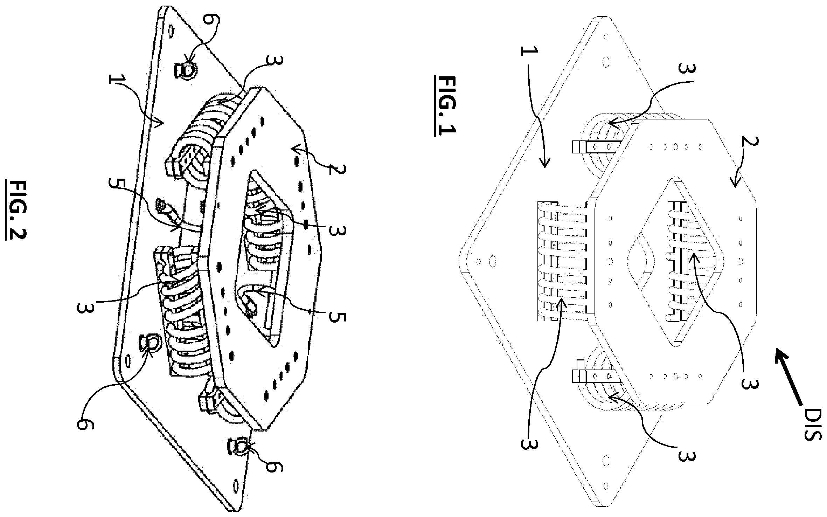

- Figures 1 and 2 show two examples of implementation of the seismic isolation device according to the present invention, in an axonometric view;

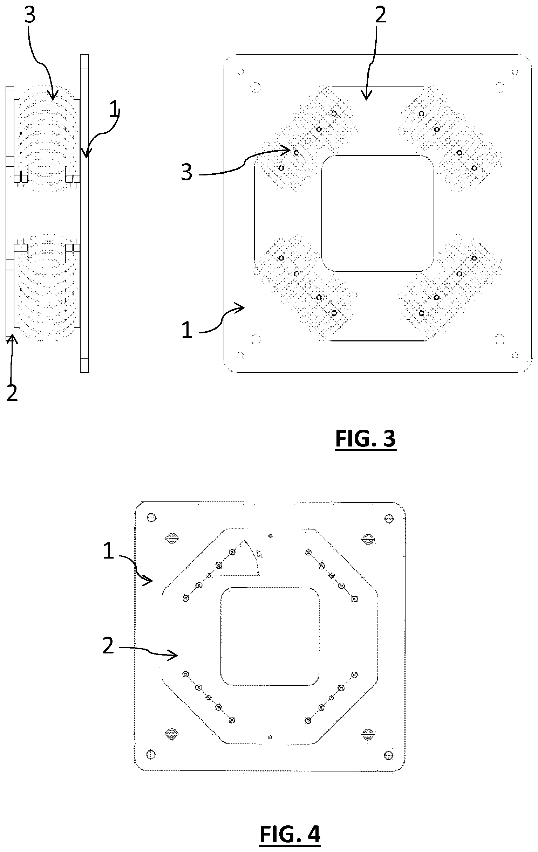

- Figure 3 shows a top view and a corresponding side view of the device, highlighting the main components thereof;
- Figure 4 shows another top view of the device;
- Figure 5 shows a side view of the device and a sectional view thereof in the plane A-A;
- Figure 6 shows in detail one example of embodiment of the wire-rope damper component of the device, by means of top view, a side view, and a view of a coil;
- Figure 7 shows a graph that highlights the improvement, as concerns horizontal acceleration over time, of the seismic isolation characteristics of the switch when the device of the invention is applied to its base, showing a maximum value which is much smaller than in the absence of the device;
- Figure 8 shows one example of application of a device according to the invention to the base of a switch;
- Figure 9 shows a dimensional example of a switch to which the device of the invention is applied;
- Figure 10 shows one example of a high-voltage electric line comprising high-voltage switches to which the device of the invention can be applied;
- Figure 11 shows a scheme of the equivalent model of the device coupled to the switch;
- Figure 12 shows graphs indicating the trend of the ratio between bending moments of the switch in the presence and in the absence of the device according to the invention, respectively.

In the drawings, the same reference numerals and letters identify the same items or components.

### Detailed description of some embodiments of the invention

The device DIS subject of the invention is so shaped as to perform the seismic isolation function for a switch for high-voltage systems, and essentially comprises, with reference to the drawings:
- a first metallic plate 1, adapted to be fixed to a basement, preferably square in shape, and possibly having a central opening;
- a second metallic plate 2, adapted to be fixed to the switch base, preferably having a regular octagonal shape, and possibly having a central opening;
- four dampers/isolators of the wire-rope type 3, mutually arranged at the vertices of a square, and applied between the two plates.

In this context, the term basement refers to the point where the switch base is fastened in the absence of the isolation device. In such a condition, the basement is also subject to seismic stresses, which are damped by means of the isolation device.

In some preferred but non-limiting embodiments of the device, the second plate is positioned over the first one and is parallel thereto, with the interposition of the four dampers/isolators, so that:
- the central openings of the two plates are positioned one over the other; said openings are preferable, though not essential, in order to make the device lighter without adversely affecting the performance, functionality and effectiveness thereof;
- four sides of the octagon of the second plate are parallel to the sides of the first plate;
- the second plate is smaller than the first one, for material optimization;
- the four dampers/isolators are positioned parallel to the diagonals of the lower plate.

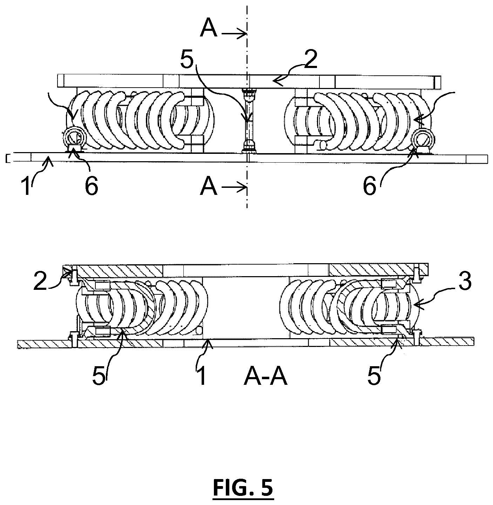

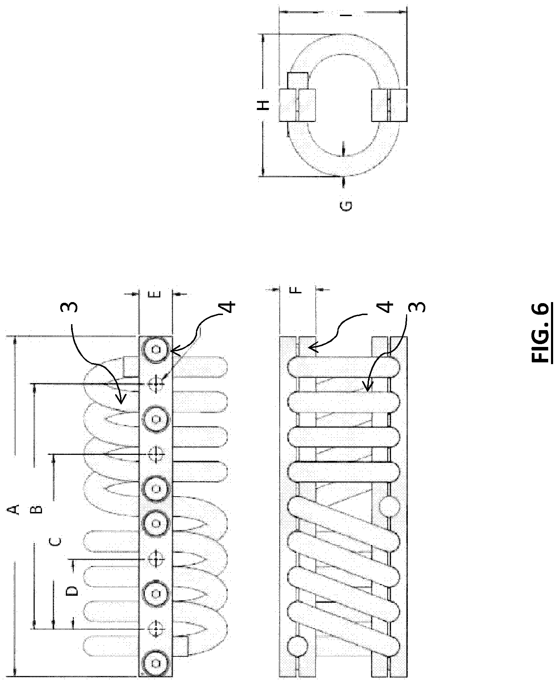

The wire-rope dampers/isolators 3 consist (see in particular Figures 5 and 6) of stainless steel coils helically wound on perforated bars 4 made of aluminium alloy or stainless steel. Each cable is formed by a number of woven strands, each strand being formed by multiple threads, the number of which varies depending on the device taken into account.

The wire-rope dampers/isolators 3 act as springs with a given elastic constant value and damping characteristics that depend on the characteristics of the object to be isolated. In the specific case of a switch for high-voltage systems, they can damp accelerations resulting from seismic events, in both the horizontal and vertical directions.

The perforated bars 4 are preferably divided into two coupled parts, on which the coils of the dampers 3 are wound, and are secured, e.g. screwed, to the upper and lower plates, thus providing the connections between the dampers and the plates.

Preferably, electric continuity elements 5 are fixed between the two plates, as an additional measure for ensuring electric continuity to ground. It is preferable that the electric connections are established within the contour of the upper plate, so as not to hinder the relative movements between the plates; therefore, the length of the continuity elements is greater than the distance between the plates.

Also, ringbolts 6 are preferably fixed to the lower plate to facilitate the handling of the device.

The following will describe a dimensional example of the seismic isolation device.

Lower plate: Thickness 200 mm; side 1,100 mm; inner square, side 400 mm.

Upper plate: Thickness 300 mm; outer octagon 880 mm; side 364.5 mm, inner square, side 400 mm;.

The plates are preferably made of S235JR (ex Fe360B) galvanized steel.

Galvanizing is carried out by immersion into a bath of melted zinc, and complies with the requirements of the CEI 7 - 6 standard "Hot galvanizing control".

In addition, the lower metallic plate has holes for fixing the device to the basement whereon the switch for high-voltage systems is secured.

With reference to Figure 6, which illustrates one non-limiting example of embodiment, the wire-rope dampers/isolators 3 have dimensions that are preferably compliant with the following table.

| | *Dimension [mm]* |
|---|---|
| A | 370 |
| B | 266.7 ± 0.5 |
| C | 190.5 ± 0.5 |
| D | 76.2 ± 0.5 |
| E | 40 |
| F | 41 |
| G | 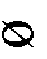 22 |
| H | 165 ± 7.5 |
| 1 | 150 ± 5 |

The materials used for the various construction elements of the wire-rope dampers/isolators 3 are preferably compliant with the following:
The stainless steel cables of the coils are of the 302-304 Stainless Steel type; the perforated bars 4 are made of stainless steel or aluminium alloy subjected to a chromate passivation treatment.

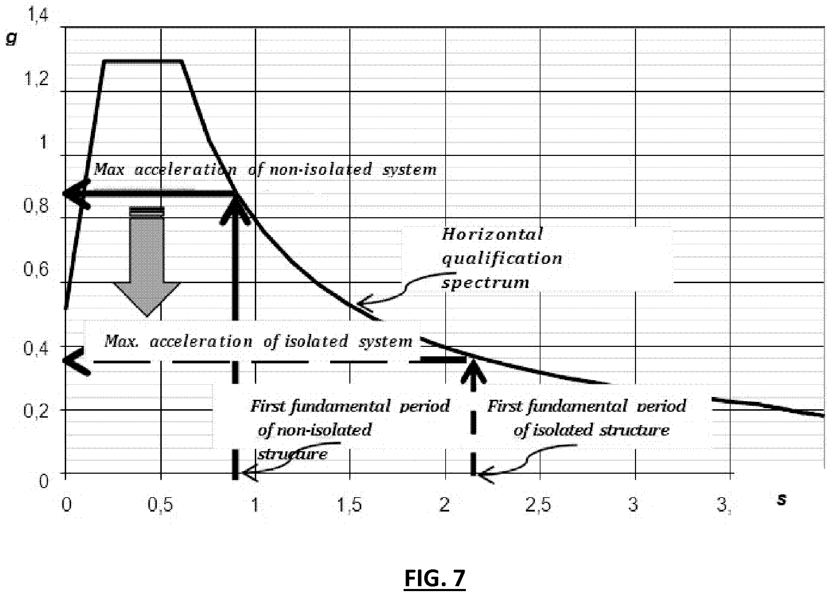

In order to reduce the stress states in the structure of the switch, it is necessary to lower the inertial forces due to the system. This is achieved by means of the device of the invention, through which the isolation at the switch base abates acceleration by increasing the fundamental period of the structure and bringing it into the descending branch of the curve of the required qualification spectrum (see graph in Figure 7).

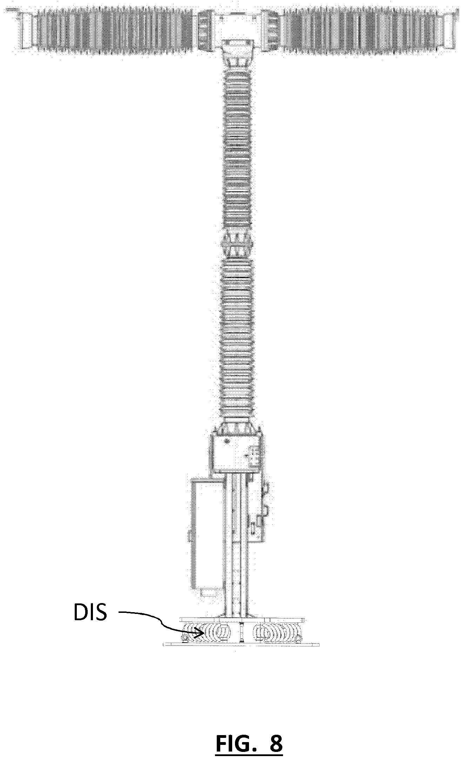

Figure 8 shows one example of application of the seismic isolation device DIS to the base of a switch.

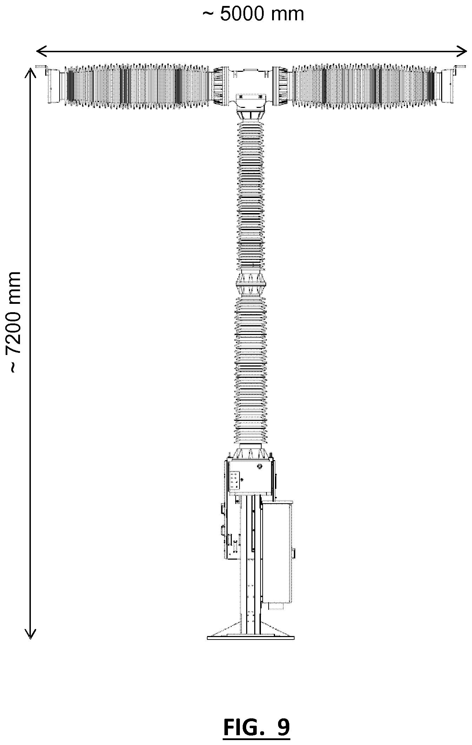

Figure 9 shows a dimensional example of a switch to which the seismic isolation device of the invention is applied. In particular, the height of the switch is 7,197 mm, the width of the top horizontal elongations is 5,038 mm. The voltage value of the switch is, for example, 420 kV.

The switch has a slender T-shaped structure that extends vertically, with a footprint much smaller than its height, which is a parameter dependent on the voltage value. The body, which is internally hollow, is made of ceramic material.

Figure 10 shows one example of a high-voltage station stall comprising, for example, a high-voltage switch I to which the device of the invention can be applied.

The seismic isolation effectiveness of the device according to the invention has been experimentally demonstrated. The test results will be described below.

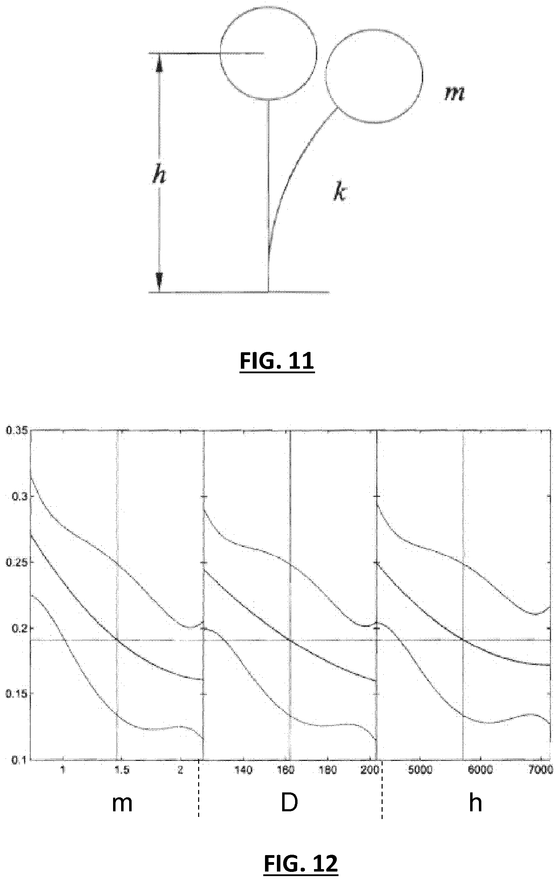

The measures taken refer to a switch model used for high-voltage electric systems (to the base of which the device of the invention is applied) based on an equivalent scheme of a simple oscillator, wherein (see Figure 11) the following parameters are highlighted:
- height h of the center of gravity (mass center) of the equivalent system;
- mass m of the switch, considered to be concentrated at the top of a massless equivalent cantilever beam;
- equivalent rigidity K (elastic constant) of the equivalent spring.

Seismic isolation effectiveness is determined by the ratio *µ* = Mᵢₛₒ/ M_{br} between the bending moment Mᵢₛₒ at the base of the switch structure in the presence of the isolator and the bending moment M_{br} at the base of the switch structure in the absence of the isolator. Fig. 12 shows three sections of the hypersurface that represents the ratio *µ* = Mᵢₛₒ/ M_{br} for a series of measurements taken around the central values (m = 1.46 t, *D* = 162 mm, *h* = 5,713 mm). In particular, we have ranges of m (mass) = 0-2 t, D (diameter of the equivalent circular section, which can be demonstrated to be related to equivalent rigidity K) = 130-200 mm; h (height of the cantilever beam) = 4,000-7,000 mm.

In addition to the central mean curve, two curves are also shown, which express the dispersion of the results around the mean curve.

One can see that all three curves of each section show decreased values as each variable m, D, h grows.

It is apparent that in all cases the ratio *µ* = Mᵢₛₒ/ M_{br}, which for the central values is below 0.2, remains small, at most exceeding the value of 0.25, and de facto staying within the 0.27-0.12 range, thus confirming the very good performance of the designed isolation system.

The above-described example of embodiment may be subject to variations without departing from the protection scope of the present invention, including all equivalent designs known to a man skilled in the art.

The elements and features shown in the various preferred embodiments may be combined together without however departing from the protection scope of the present invention.

The advantages deriving from the application of the present invention are clear. The isolation system created by the device of the invention does not suffer from the above-mentioned problems because it can also be subjected to traction stresses: it mainly puts into play its vertical deformability, in addition to being also deformable in the two horizontal directions; this deformability turns into a "rocking" motion, which is particularly effective in reducing the natural vibration frequencies of the first modes of a slender structure subject to seismic stress, thus featuring high deformability in all three main directions and good capability of dissipating seismic energy, by absorbing accelerations in all three directions.

From the above description, those skilled in the art will be able to produce the object of the invention without introducing any further construction details.

## Claims

1. Seismic isolated base of a switch for a high-voltage electric system, comprising at least one seismic isolation device, said device comprising:
- a first metallic plate (1), square in shape, adapted to be fixed to a basement;
- a second metallic plate (2), adapted to be fixed to said switch base; **characterised by**
- four dampers/isolators of the wire-rope type (3), connected between said first and second plates, mutually arranged at the vertices of a square, and oriented at a 45° angle relative to the sides of said first plate, wherein
- said first and second metallic plates (1, 2) comprise, respectively, a first and a second central openings;
- said first and second central openings have the same size and are positioned one over the other.

2. Seismic isolated base of a switch according to claim 1, wherein:
- said second plate has an octagonal shape;
- four sides of the octagon of the second plate are parallel to the sides of the first plate;
- the second plate is smaller than the first plate.

3. Seismic isolated base of a switch according to claim 1, wherein said dampers/isolators (3) comprise coils of stainless steel cables helically wound on perforated bars (4) made of aluminum alloy or stainless steel, each cable being formed by a number of woven strands, each strand being formed by a number of threads.

4. Seismic isolated base of a switch according to claim 3, wherein said perforated bars (4) are divided into two coupled parts where said coils are wound, and are fixed to the upper and lower plates so as to provide said connections between said first and second plates.

5. Seismic isolated base of a switch according to claim 1, comprising electric continuity elements (5) fixed between said first (1) and second (2) plates as an electric ground connection.

6. Seismic isolated base of a switch according to claim 1, wherein said first (1) and second (2) plates are made of S235JR galvanized steel.

7. Seismic isolated base of a switch according to claim 3, wherein said stainless steel cables are of the 302/304 Stainless Steel type.

8. Seismic isolated base of a switch according to any one of the preceding claims, wherein a ratio *µ* = Mᵢₛₒ/ M_{br} between a bending moment, Mᵢₛₒ, at the base of said switch in the presence of said seismic isolation device and a bending moment, M_{br}, in the absence of said seismic isolation device is in the range of 0.27 to 0.12, said ratio resulting from a model of an equivalent system comprising said switch either combined or not with said device, and wherein said ratio is determined on the basis of the following parameters:
- height of the centre of gravity or mass centre of the equivalent system;
- mass of the high-voltage switch, considered to be concentrated at the top of a massless equivalent cantilever beam;
- equivalent rigidity or elastic constant of the equivalent spring.

## Patentansprüche

1. Seismisch isolierte Basis eines Schalters für ein elektrisches Hochspannungssystem, umfassend zumindest eine seismische Isolationsvorrichtung, wobei die Vorrichtung umfasst:
- eine erste Metallplatte (1) von quadratischer Form, die angepasst ist, um an einem Keller befestigt zu werden;
- eine zweite Metallplatte (2), die angepasst ist, um an der Schalterbasis befestigt zu werden, **gekennzeichnet, durch**
- vier Dämpfer/Isolatoren des Drahtseiltyps (3), die zwischen der ersten und der zweiten Platte verbunden sind, die gegenseitig an den Eckpunkten eines Quadrats angeordnet sind und die in einem Winkel von 45° relativ zu den Seiten der ersten Platte ausgerichtet sind, wobei
- die erste und die zweite Metallplatte (1, 2) eine erste bzw. eine zweite zentrale Öffnung umfassen;
- die erste und die zweite zentrale Öffnung die gleiche Größe aufweisen und eine über der anderen positioniert sind.

2. Seismisch isolierte Basis eines Schalters nach Anspruch 1, wobei:
- die zweite Platte eine achteckige Form hat;
- vier Seiten des Achtecks der zweiten Platte parallel zu den Seiten der ersten Platte sind;
- die zweite Platte kleiner als die erste Platte ist.

3. Seismisch isolierte Basis eines Schalters nach Anspruch 1, wobei die Dämpfer/Isolatoren (3) Spulen aus Edelstahlkabeln umfassen, die spiralförmig auf perforierte Stangen (4) aus Aluminiumlegierung oder Edelstahl gewickelt sind, wobei jedes Kabel durch eine Anzahl von gewebten Strängen gebildet wird, wobei jeder Strang durch eine Anzahl von Fäden gebildet wird.

4. Seismisch isolierte Basis eines Schalters nach Anspruch 3, wobei die perforierten Stangen (4) in zwei gekoppelte Teile unterteilt sind, wo die Spulen gewickelt sind, und an der unteren und der oberen Platte befestigt sind, um die Verbindungen zwischen der ersten und der zweiten Platte bereitzustellen.

5. Seismisch isolierte Basis eines Schalters nach Anspruch 1, umfassend elektrische Durchgangselemente (5), die zwischen der ersten (1) und der zweiten (2) Platte als elektrische Masseverbindung befestigt sind.

6. Seismisch isolierte Basis eines Schalters nach Anspruch 1, wobei die erste (1) und die zweite (2) Platte aus verzinktem Stahl S235JR gefertigt sind.

7. Seismisch isolierte Basis eines Schalters nach Anspruch 3, wobei die Edelstahlkabel von dem 302/304 Edelstahltyp sind.

8. Seismisch isolierte Basis eines Schalters nach einem der vorstehenden Ansprüche, wobei ein Verhältnis µ = Mᵢₛₒ/M_{br} zwischen einem Biegemoment, Mᵢₛₒ, an der Basis des Schalters in Anwesenheit der seismischen Isolationsvorrichtung und einem Biegemoment, M_{br}, in Abwesenheit der seismischen Isolationsvorrichtung in dem Bereich von 0,27 bis 0,12 liegt, wobei das Verhältnis aus einem Modell eines gleichwertigen Systems resultiert, das den Schalter, entweder kombiniert mit der Vorrichtung oder nicht, umfasst und wobei das Verhältnis auf der Grundlage der folgenden Parameter bestimmt wird:
- Höhe des Schwerpunkts oder Massenmittelpunkts des gleichwertigen Systems;
- Masse des Hochspannungsschalters, von der angenommen wird, dass sie an dem oberen Ende eines masselosen gleichwertigen Auslegerbalkens konzentriert ist;
- gleichwertige Steifigkeit oder elastische Konstante der gleichwertigen Feder.

## Revendications

1. Base isolée sismique d'un commutateur pour un système électrique haute tension, comprenant au moins un dispositif d'isolation sismique, ledit dispositif comprenant :
- une première plaque métallique (1), de forme carrée, adaptée pour être fixée à un sous-sol ;
- une seconde plaque métallique (2), adaptée pour être fixée à ladite base de commutateur ; **caractérisée par**
- quatre amortisseurs/isolateurs du type câble métallique (3), connectés entre lesdites première et seconde plaques, mutuellement agencées aux sommets d'un carré, et orientés à un angle de 45° par rapport aux côtés de ladite première plaque, dans laquelle
- lesdites première et seconde plaques métalliques (1, 2) comprennent, respectivement, une première et une seconde ouverture centrale ;
- lesdites première et seconde ouvertures centrales ont la même taille et sont positionnées l'une par-dessus l'autre.

2. Base isolée sismique d'un commutateur selon la revendication 1, dans laquelle :
- ladite seconde plaque a une forme octogonale ;
- quatre côtés de l'octogone de la seconde plaque sont parallèles aux côtés de la première plaque ;
- la seconde plaque est plus petite que la première plaque.

3. Base isolée sismique d'un commutateur selon la revendication 1, dans laquelle lesdits amortisseurs/isolateurs (3) comprennent des bobines de câbles en acier inoxydable enroulés en hélice sur des barres perforées (4) réalisées en alliage d'aluminium ou en acier inoxydable, chaque câble étant composé d'un nombre de torons tissés, chaque toron étant composé d'un nombre de fils.

4. Base isolée sismique d'un commutateur selon la revendication 3, dans laquelle lesdites barres perforées (4) sont divisées en deux parties couplées où lesdites bobines sont enroulées, et sont fixées aux plaques supérieure et inférieure de façon à fournir lesdites connexions entre lesdites première et seconde plaques.

5. Base isolée sismique d'un commutateur selon la revendication 1, comprenant des éléments de continuité électrique (5) fixés entre lesdites première (1) et seconde (2) plaques en tant que connexion de terre électrique.

6. Base isolée sismique d'un commutateur selon la revendication 1, dans laquelle lesdites première (1) et seconde (2) plaques sont réalisées en acier galvanisé S235JR.

7. Base isolée sismique d'un commutateur selon la revendication 3, dans laquelle lesdits câbles en acier inoxydable sont du type acier inoxydable 302/304.

8. Base isolée sismique d'un commutateur selon l'une quelconque des revendications précédentes, dans laquelle un rapport µ = Mᵢₛₒ/M_{br} entre un moment de flexion, Mᵢₛₒ, au niveau de la base dudit commutateur en présence dudit dispositif d'isolation sismique et un moment de flexion, M_{br}, en l'absence dudit dispositif d'isolation sismique est dans la plage de 0,27 à 0,12, ledit rapport résultant d'un modèle d'un système équivalent comprenant ledit commutateur combiné ou non audit dispositif, et dans laquelle ledit rapport est déterminé sur la base des paramètres suivants :
- hauteur du centre de gravité ou centre de masse du système équivalent,
- masse du commutateur haute tension, considérée comme étant concentrée en haut d'une poutre en porte-à-faux équivalente sans masse ;
- rigidité équivalente ou constante élastique du ressort équivalent.
